# EUROPÄISCHE PATENTANMELDUNG

(11) **EP 2 251 615 A1**
(43) Veröffentlichungstag der Anmeldung: **17.11.2010**
(21) Anmeldenummer: 10160916.2
(22) Anmeldetag: 23.04.2010
(51) Int. Cl.: F24F 13/02, F16L 23/024, F16L 23/032

(54) **Kanal, Flansch und System bestehend aus einem Kanal und einem Flansch**

(30) Priorität: 27.04.2009 DE 202009006052 U
(71) Anmelder: TROX GmbH, 47506 Neukirchen-Vluyn (DE)
(72) Erfinder: Stefan, Lange, 47506 Neukirchen-Vluyn (DE); Schicks, Heike, 47802 Krefeld (DE); Leitner, Daniel, 41751 Viersen (DE)
(74) Vertreter: DR. STARK & PARTNER

(57) **Zusammenfassung**

Die Erfindung betrifft einen Kanal, insbesondere Kunststoffkanal, einen Flansch sowie ein System Kanal, insbesondere Kunststoffkanal. Um einen Kanal anzugeben, der bei gleichzeitig reduzierter Lagerhaltung eine einfache Verbindung von Flansch und Kanalende ermöglicht, soll der Kanal auf seiner Außenseite im Bereich wenigstens eines Kanalendes entweder zumindest einen, insbesondere umlaufenden, Vorsprung aufweisen, wobei jeder Vorsprung mit einer entsprechenden Ausnehmung eines auf den Kanal aufgesteckten Flansches zusammenwirkt, oder aber zumindest eine, insbesondere umlaufende, Ausnehmung aufweisen, wobei jede Ausnehmung mit einem entsprechenden Vorsprung eines auf den Kanal aufgesteckten Flansches zusammenwirkt.

Die Erfindung betrifft auch einen Flansch zur Montage an einem Kanal sowie ein System aus einem Kanal und zumindest einem, auf ein Kanalende aufzubringenden Flansch.

## Beschreibung

Die Erfindung betrifft einen Kanal, insbesondere Kunststoffkanal, einen Flansch sowie ein System.

Derartige Kanäle können nicht nur zur Weiterleitung eines strömenden Mediums innerhalb einer klimatechnischen Anlage eingesetzt werden. Sie können auch noch lüftungstechnische Komponenten, wie z. B. Volumenstromregler, enthalten. Es sind unterschiedliche Techniken bekannt, zwei benachbarte Kunststoffkanäle miteinander zu verbinden. Neben einem stumpfen Verschweißen der beiden Kanalenden zweier Kanäle ist es auch insbesondere bei Kanälen, in denen lüftungstechnische Komponenten enthalten sind, üblich, Flansche zu verwenden. Im Stand der Technik werden die Flansche auf das Kanalende aufgeschweißt.

Als Nachteil erweist sich zum einen, dass das Anschweißen eines Flansches auf das Kanalende aufwendig ist. Zum anderen müssen Kanäle sowohl mit als auch ohne Flansche bevorratet werden, damit im Falle eines Ausfalls einer Komponente ein sofortiger Austausch möglich ist.

Aufgabe der Erfindung ist es, die vorgenannten Nachteile zu vermeiden und einen Kanal, einen Flansch und ein System anzugeben, das bei gleichzeitig reduzierter Lagerhaltung eine einfache Verbindung von Flansch und Kanalende ermöglicht.

Diese Aufgabe wird dadurch gelöst, dass der Kanal auf seiner Außenseite im Bereich wenigstens eines Kanalendes entweder zumindest einen, insbesondere umlaufenden, Vorsprung aufweist, wobei jeder Vorsprung mit einer entsprechenden Ausnehmung eines auf den Kanal aufgesteckten Flansches zusammenwirkt, oder aber zumindest eine, insbesondere umlaufende, Ausnehmung aufweist, wobei jede Ausnehmung mit einem entsprechenden Vorsprung eines auf den Kanal aufgesteckten Flansches zusammenwirkt.

Durch die erfindungsgemäße Ausgestaltung muss lediglich ein Kanal ohne einen Flansch bevorratet werden. Ist für einen Austausch ein Kanal mit einem Flansch erforderlich, muss der entsprechende Flansch lediglich auf das Kanalende aufgesteckt werden. Dabei wirken je nach Ausgestaltung entweder die Vorsprünge des Kanalendes mit der korrespondierenden Ausnehmung in dem Flansch oder umgekehrt die in dem Kanal vorgesehenen Ausnehmungen mit den Vorsprüngen des Flanschs zusammen. Eine separate Abdichtung des Flansches gegenüber dem Kanal ist, insbesondere bei Kunststoffkanälen aufgrund der Elastizität des Materials, nicht erforderlich.

Vorzugsweise sind zumindest zwei, über den Umfang des Kanals im Wesentlichen gleichmäßig verteilt angeordnete Vorsprünge vorgesehen.

Zum leichteren Aufstecken eines Flansches bietet sich an, wenn wenigstens ein Vorsprung zumindest auf der dem aufsteckseitigen Kanalende zugewandten Seite abgeschrägt oder abgerundet ausgebildet ist.

Um ein unbeabsichtigtes Lösen eines Flansches von dem Kanalende zu verhindern, bietet sich an, wenn zumindest ein Vorsprung als Rastelement ausgebildet ist.

Ein erfindungsgemäßer Flansch zur Montage an einem Kanal, insbesondere Kunststoffkanal ist **dadurch gekennzeichnet, dass** der Flansch auf seiner inneren Mantelfläche entweder zumindest eine, insbesondere umlaufende, Ausnehmung aufweist, wobei jede Ausnehmung mit einem entsprechenden Vorsprung eines in den Flansch eingeführten Kanals zusammenwirkt, oder aber zumindest einen, insbesondere umlaufenden, Vorsprung aufweist, wobei jeder Vorsprung mit einer entsprechenden Ausnehmung eines in den Flansch eingeführten Kanals zusammenwirkt.

Der Flansch ist üblicherweise kreisringförmig ausgebildet und hat eine kreisförmige Innenaussparung mit einer inneren Mantelfläche. Selbstverständlich ist es auch möglich, dass die innere Mantelfläche nach Art eines Rohrstutzens gegenüber dem Flansch übersteht.

Selbstverständlich ist es aber auch möglich, dass der Flansch auf seiner inneren Mantelfläche zumindest zwei, über den Umfang der Mantelfläche im Wesentlichen gleichmäßig verteilt angeordnete Ausnehmungen bzw. Vorsprünge aufweist.

Vorzugsweise ist der im aufgeschobenen Zustand dem benachbarten Kanalende abgewandte Innenrand der Innenaussparung abgeschrägt. Dies erleichtert das Einführen des Kanalendes in den Flansch.

Um die Einführtiefe des Kanalendes in den Flansch zu begrenzen, bietet sich an, wenn der Flansch wenigstens einen sich über die Innenaussparung hinaus einwärts erstreckenden Anlagebereich, vorzugsweise einen umlaufenden Anlagebereich, aufweist. Im eingeführten und fixierten Zustand liegt das Kanalende stirnseitig an dem Anlagebereich an.

Die Erfindung betrifft auch ein System aus einem Kanal und zumindest einem, auf ein Kanalende aufzubringenden Flansch.

Im Folgenden wird ein in den Zeichnungen dargestelltes Ausführungsbeispiel der Erfindung erläutert. Es zeigen:
- Fig. 1: eine schräge Draufsicht auf einen erfindungsgemäßen Kanal mit einem erfindungs- gemäßen aufgesteckten Flansch,
- Fig. 2: einen Schnitt durch den Gegenstand nach Fig. 1 und
- Fig. 3: das Detail "X" aus Fig. 2.

In allen Figuren werden für gleiche bzw. gleichartige Bauteile übereinstimmende Bezugszeichen verwendet.

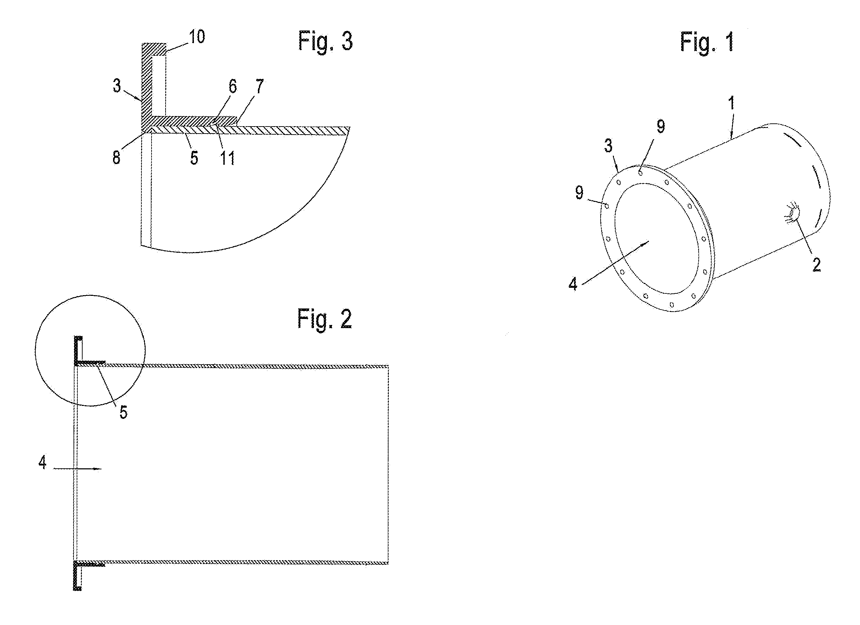

Die Figuren zeigen einen Kanal 1, in dessen Innerem bei diesem Ausführungsbeispiel ein nicht näher dargestellter Volumenstromregler vorgesehen ist. Aus Gründen der einfacheren Darstellung ist in Fig. 2 lediglich eine Durchführung 2 für die Welle des nicht dargestellten Klappenblattes des Volumenstromreglers angedeutet. Auf die Darstellung der Durchführung 2 in Figur 2 ist verzichtet worden.

Der Kanal 1 weist zwei Kanalenden auf. An dem in den Figuren dargestellten linken Kanalende ist ein Flansch 3 aufgesteckt. Der Flansch 3 ist kreisringförmig ausgebildet und weist einen mittig angeordnete, kreisförmige Innenaussparung 4 mit einer inneren Mantelfläche 5 auf. Die innere Mantelfläche 5 steht bei diesem Ausführungsbeispiel nach Art eines Rohrstutzens nach rechts gegenüber dem Flansch 3 über.

In der inneren Mantelfläche 5 sind mehrere Ausnehmungen 6 vorgesehen, die in dem dargestellten Ausführungsbeispiel einen in etwa rechteckigen Querschnitt aufweisen. Der im aufgeschobenen Zustand dem benachbarten Kanalende abgewandte Innenrand 7 der Innenaussparung 4 ist abgeschrägt ausgebildet, damit der Flansch 3 einfacher aufsteckbar ist. Wie deutlich erkennbar, weist der Flansch 3 einen sich über die Innenaussparung 4 hinaus einwärts erstreckenden umlaufenden Anlagebereich 8 auf.

Zur Befestigung zweier Flansche 3 angrenzender Kanäle 1 sind in dem Flansch 3 mehrere, gleichmäßig über den Umfang verteilt angeordnete Bohrungen 9 vorgesehen, die zur Aufnahme nicht dargestellter Befestigungsmittel dienen. An dem äußeren Rand des Flansches 3 ist ein umlaufender Kragen 10 vorgesehen.

Wie in Fig. 3 erkennbar, weist der Kanal 3 auf seiner Außenseite im Bereich des linken Kanalendes mehrere, zumindest in etwa gleichmäßig über den Umfang verteilt angeordnete Vorsprünge 11 auf, wobei jeder Vorsprung 11 mit einer entsprechenden Ausnehmung 6 des auf den Kanal 1 aufgesteckten Flansches 3 zusammenwirkt. Die Vorsprünge 11 sind auf der dem aufsteckseitigen Kanalende zugewandten Seite abgeschrägt ausgebildet. Dies erleichtert das Aufstecken des Flansches 3 auf den Kanal 1. Auf der dem aufsteckseitigen Kanalende abgewandten Seite sind die Vorsprünge 11 rastelementartig ausgebildet, um ein unbeabsichtigtes Lösen zu verhindern.

Wie in Fig. 3 erkennbar, berührt das Kanalende im eingeführten Zustand stirnseitig den umlaufenden Anlagebereich 8. Der Kanal 1 und der Flansch 3 können aus Kunststoff gefertigt sind. Es ist aber auch durchaus möglich, dass unterschiedliche Materialien verwendet sind. So kann beispielsweise der Kanal 1 aus Kunststoff und der Flansch 3 aus Metall gefertigt sein. Auch eine umgekehrte Ausbildung ist selbstverständlich möglich.

## Patentansprüche

1. Kanal (1), insbesondere Kunststoffkanal, **dadurch gekennzeichnet, dass** der Kanal (1) auf seiner Außenseite im Bereich wenigstens eines Kanalendes entweder zumindest einen, insbesondere umlaufenden, Vorsprung (6) aufweist, wobei jeder Vorsprung (6) mit einer entsprechenden Ausnehmung (11) eines auf den Kanal (1) aufgesteckten Flansches (3) zusammenwirkt, oder aber zumindest eine, insbesondere umlaufende, Ausnehmung (11) aufweist, wobei jede Ausnehmung (11) mit einem entsprechenden Vorsprung (6) eines auf den Kanal (1) aufgesteckten Flansches (3) zusammenwirkt.

2. Kanal (1) nach dem vorhergehenden Anspruch, **dadurch gekennzeichnet, dass** zumindest zwei, über den Umfang des Kanals (1) im Wesentlichen gleichmäßig verteilt angeordnete Vorsprünge (6) vorgesehen sind.

3. Kanal (1) nach dem vorhergehenden Anspruch, **dadurch gekennzeichnet, dass** wenigstens ein Vorsprung (1) zumindest auf der dem aufsteckseitigen Kanalende zugewandten Seite abgeschrägt oder abgerundet ausgebildet ist.

4. Flansch (3) zur Montage an einem Kanal (1), insbesondere Kunststoffkanal, **dadurch gekennzeichnet, dass** der Flansch (3) auf seiner inneren Mantelfläche (5) entweder zumindest eine, insbesondere umlaufende, Ausnehmung (6) aufweist, wobei jede Ausnehmung (6) mit einem entsprechenden Vorsprung (11) eines in den Flansch (3) eingeführten Kanals (1) zusammenwirkt, oder aber zumindest einen, insbesondere umlaufenden, Vorsprung (11) aufweist, wobei jeder Vorsprung (11) mit einer entsprechenden Ausnehmung (6) eines in den Flansch (3) eingeführten Kanals (1) zusammenwirkt.

5. Flansch (3) nach dem vorhergehenden Anspruch, **dadurch gekennzeichnet, dass** der im aufgeschobenen Zustand dem benachbarten Kanalende abgewandte Innenrand (7) der Innenaussparung (4) abgeschrägt ist.

6. Flansch (3) nach einem der Ansprüche 4 oder 5, **dadurch gekennzeichnet, dass** der Flansch (3) wenigstens einen sich über die Innenaussparung (4) hinaus einwärts erstreckenden Anlagebereich (8), vorzugsweise einen umlaufenden Anlagebereich (8), aufweist.

7. System bestehend aus einem Kanal (1) nach einem der Ansprüche 1 bis 3 und zumindest einem, auf ein Kanalende aufzubringenden Flansch (3) nach einem der Ansprüche 4 bis 6.
